# EUROPEAN PATENT APPLICATION

(11) **EP 3 766 708 A1**
(43) Date of publication of application: **20.01.2021**
(21) Application number: 20180461.4
(22) Date of filing: 17.06.2020
(51) Int. Cl.: B60C 15/00, B60C 15/02, B60C 1/00, B60C 15/06

(54) **PNEUMATIC TIRE**

(30) Priority: 17.07.2019 JP 2019131581
(71) Applicant: SUMITOMO RUBBER INDUSTRIES, LTD., Chuo-ku Kobe-shi Hyogo 651-0072 (JP)
(72) Inventor: HIRAO, Shogo, Chuo-ku, Kobe-shi,, Hyogo 651-0072 (JP)
(74) Representative: TBK

(57) **Abstract**

A tire having excellent rim shift resistance and a rim shift resistance evaluation method are provided. The pneumatic tire includes a pair of clinches and/or a pair of chafers, and is configured such that, when the tire is mounted onto a rim, the clinches and the chafers are in contact with the rim. The pair of clinches and the pair of chafers are formed from a clinch rubber or a fiber-coating rubber containing a vulcanized rubber having a dynamic friction coefficient not less than 1.0 as a main component. The dynamic friction coefficient is obtained by measuring a test piece having a thickness of 1 mm and a plan view area of 49 mm², using a friction tester provided with a friction surface having a surface roughness similar to that of the rim, at a contact pressure of 2000 kPa and a sliding speed of 10 mm/s. The rim shift resistance evaluation method includes a step of preparing a test piece formed from a vulcanized rubber, a step of measuring a dynamic friction coefficient of the test piece, and a step of evaluating the vulcanized rubber using the dynamic friction coefficient as an index.

## Description

### BACKGROUND OF THE INVENTION

### Field of the Invention

The present invention relates to a pneumatic tire, a production method therefor, and a vulcanized rubber evaluation method.

### Description of the Background Art

A tire is mounted to a vehicle in a state where the tire is mounted on a rim. Normally, when a tire is mounted on a rim, a pair of clinches and a pair of chafers are in contact with the rim. During running of a vehicle, particularly, due to repeated rapid braking and driving, great force is applied from the rim to the clinches and the chafers. Due to the great force, so-called rim shift may occur between the tire and the rim.

Due to occurrence of rim shift, force variation (FV), traction, and tire balance deteriorate, resulting in a decrease in steering stability. Furthermore, rim shift causes tire damage and thus may affect safety. A tire having high rim shift resistance is desired.

To improve rim shift resistance, a vulcanized rubber for forming clinches and chafers is required to have characteristics of being able to withstand great force from a rim during running and firmly hold fitting between the rim and a tire. In addition, for examining the blending formula of such a rubber for clinches and chafers, a method for accurately evaluating rim shift resistance is also important.

Japanese Laid-Open Patent Publication No. 2012-73048 discloses a rim shift amount measuring apparatus that detects a rotation angle of a tire and a rotation angle of a rim and calculates the difference between the rotation angles as a rim shift amount. Japanese Laid-Open Patent Publication No. 2017-167066 proposes a method in which the friction performance of a rubber member subjected to friction treatment is predicted by using a viscoelastic property value of a test piece sampled from the rubber member.

There is room for further improvement in rim shift resistance of tires. However, with the measurement apparatus disclosed in Japanese Laid-Open Patent Publication No. 2012-73048, even in the case of examining the blending formula of a rubber for clinches and/or chafers in order to improve rim shift resistance, production of tires is necessary, and it takes man-hours. Regarding the prediction method proposed in Japanese Laid-Open Patent Publication No. 2017-167066, rim shift resistance is not evaluated, and no mention is made of the correlation between the prediction result and rim shift resistance. A method for simply and highly accurately evaluating the rim shift resistance of a vulcanized rubber for clinches and/or chafers has not been proposed yet.

An object of the present invention is to provide a pneumatic tire having excellent rim shift resistance and a production method therefor, and another object of the present invention is to provide a simple evaluation method for selecting the blending formula of a rubber having high rim shift resistance.

### SUMMARY OF THE INVENTION

As a result of a thorough study, the present inventors have found that a dynamic friction coefficient obtained for a vulcanized rubber by a specific method under a specific condition highly correlates with the rim shift resistance of a tire including clinches or chafers formed using the vulcanized rubber, thereby accomplishing the present invention.

Specifically, a pneumatic tire according to the present invention includes a pair of clinches and/or a pair of chafers and is configured such that, when the tire is mounted on a rim, each clinch and each chafer are in contact with the rim. The pair of clinches and/or the pair of chafers are formed from a clinch rubber or a fiber-coating rubber. Main components of the clinch rubber and the fiber-coating rubber are each a vulcanized rubber. The vulcanized rubber has a dynamic friction coefficient not less than 1.0. The dynamic friction coefficient is obtained by measuring a test piece having a thickness of 1 mm and a plan view area of 49 mm², using a friction tester provided with a friction surface having a surface roughness similar to that of the rim, at a contact pressure of 2000 kPa and a sliding speed of 10 mm/s.

Preferably, the vulcanized rubber has a JIS-A hardness not less than 70.

Preferably, the vulcanized rubber contains an inorganic filler having a flat shape. Preferably, the inorganic filler having a flat shape is selected from the group consisting of hard clay, mica, talc, calcium carbonate, bituminous coal, graphene, aluminum oxide, and aluminum hydroxide.

According to another aspect, a method for producing the pneumatic tire according to the present invention includes:
(1) a preparation step of preparing a test piece formed from a vulcanized rubber and having a thickness of 1 mm and a plan view area of 49 mm²;
(2) a measurement step of measuring a dynamic friction coefficient of the test piece, using a friction tester provided with a friction surface having a surface roughness similar to that of a rim, under conditions of a contact pressure of 2000 kPa and a sliding speed of 10 mm/s;
(3) an evaluation step of evaluating the vulcanized rubber using the dynamic friction coefficient obtained in the measurement step as an index; and
(4) a production step of producing the pair of clinches and/or the pair of chafers from a clinch rubber or a fiber-coating rubber obtained by using a blending formula of a vulcanized rubber for which the dynamic friction coefficient is not less than 1.0.

According to still another aspect, a rim shift resistance evaluation method according to the present invention includes:
(1) a preparation step of preparing a test piece formed from a vulcanized rubber;
(2) a measurement step of measuring a dynamic friction coefficient of the test piece using a friction tester provided with a friction surface having a surface roughness similar to that of a rim; and
(3) an evaluation step of evaluating the vulcanized rubber using the dynamic friction coefficient obtained in the measurement step as an index. Conditions for measuring the dynamic friction coefficient include a contact pressure of 2000 kPa or greater and a sliding speed of 10 mm/s or greater.

Preferably, the test piece has a thickness not greater than 1.5 mm and a plan view area not greater than 100 mm². Preferably, the conditions for measuring the dynamic friction coefficient include a load of 100 N or greater.

In a friction test using a friction tester provided with a friction surface having a surface roughness similar to that of a rim, a contact pressure of 2000 kPa or greater and a sliding speed of 10 mm/s or greater are set as conditions for measuring a dynamic friction coefficient, whereby the behavior of a contact portion of a rim and a tire in a state of running on a road surface is simulated. The dynamic friction coefficient of a vulcanized rubber obtained by the measurement method under the measurement conditions highly correlates with the rim shift resistance of a tire including clinches and/or chafers formed using the vulcanized rubber. The blending formula of a vulcanized rubber having excellent rim shift resistance can be efficiently and simply selected by using the dynamic friction coefficient as an index.

In particular, high rim shift resistance is achieved with the tire according to the present invention which includes clinches and/or chafers formed from a clinch rubber or a fiber-coating rubber obtained by containing, as a main component, a vulcanized rubber for which a dynamic friction coefficient obtained at a contact pressure of 2000 kPa and a sliding speed of 10 mm/s is not less than 1.0.

### BRIEF DESCRIPTION OF THE DRAWINGS

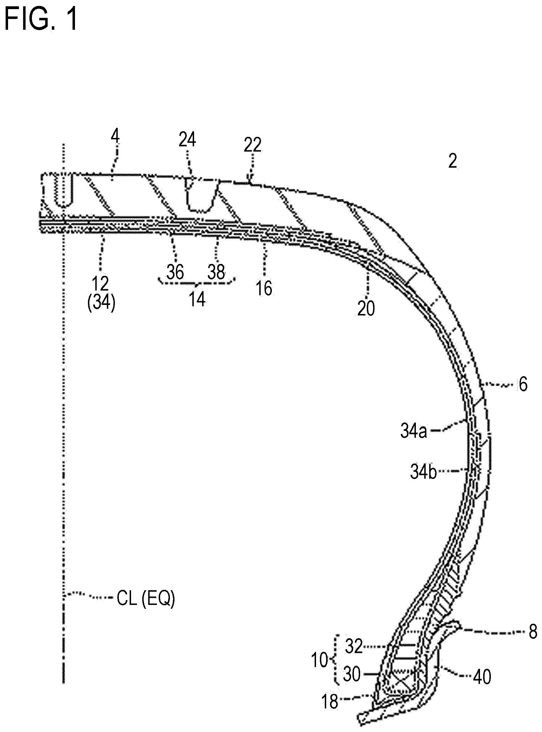

FIG. 1 is a cross-sectional view showing a part of a pneumatic tire according to an embodiment of the present invention.

### DESCRIPTION OF THE PREFERRED EMBODIMENTS

Hereinafter, the present invention will be described in detail based on preferred embodiments with appropriate reference to the drawing.

FIG. 1 shows a pneumatic tire 2. FIG. 1 shows a part of a cross-section, of the tire 2, perpendicular to the circumferential direction thereof. In FIG. 1, the up-down direction is the radial direction of the tire 2, the right-left direction is the axial direction of the tire 2, and the direction perpendicular to the surface of the sheet is the circumferential direction of the tire 2. In FIG. 1, an alternate long and short dash line CL represents the equator plane (EQ) of the tire 2. The shape of the tire 2 is symmetrical about the equator plane except for a tread pattern.

The tire 2 includes a tread 4, a pair of sidewalls 6, a pair of clinches 8, a pair of beads 10, a carcass 12, a belt 14, an inner liner 16, a pair of chafers 18, and a pair of cushion layers 20. The tire 2 is of a tubeless type. The tire 2 is mounted to a passenger car.

The tread 4 has a shape that is convex outward in the radial direction. The tread 4 forms a tread surface 22 that is brought into contact with a road surface. Grooves 24 are formed on the tread 4. The tread pattern is formed by the grooves 24. The tread 4 has a plurality of layers formed from a vulcanized rubber, which are not shown.

Each sidewall 6 extends from an edge of the tread 4 substantially inward in the radial direction. The outer end in the radial direction of the sidewall 6 is joined to the tread 4. The inner end in the radial direction of the sidewall 6 is joined to the clinch 8. The sidewall 6 is formed from a vulcanized rubber having excellent cut resistance and weather resistance. The sidewall 6 is located outward of the carcass 12 in the axial direction. The sidewall 6 prevents the carcass 12 from being damaged.

Each clinch 8 is located substantially inward of the sidewall 6 in the radial direction. The clinch 8 is located outward of the bead 10 and the carcass 12 in the axial direction. When the tire 2 is mounted onto a rim 40, the clinch 8 comes into contact with a flange of the rim 40 and supports a load from the rim 40. The clinch 8 is formed from a clinch rubber. The main component of the clinch rubber is a vulcanized rubber having excellent wear resistance. The vulcanized rubber will be described in detail later.

Each bead 10 is located inward of the clinch 8 in the axial direction. The bead 10 includes a core 30 and an apex 32 extending from the core 30 outward in the radial direction. The core 30 has a ring shape and includes a wound non-stretchable wire. A typical material of the wire is steel. The apex 32 is tapered outward in the radial direction. The apex 32 is formed from a vulcanized rubber having a high hardness.

The carcass 12 includes a carcass ply 34. The carcass ply 34 extends on and between the bead 10 at both sides along the tread 4 and the sidewalls 6. The carcass ply 34 is turned up around each core 30 from the inner side toward the outer side in the axial direction. Due to this turning-up, a main portion 34a and turned-up portions 34b are formed in the carcass ply 34.

The carcass ply 34 includes multiple cords aligned with each other, and a topping rubber. The absolute value of the angle of each cord relative to the equator plane is 75° to 90°. In other words, the carcass 12 has a radial structure. The cords are formed from an organic fiber. Examples of preferable organic fibers include polyester fibers, nylon fibers, rayon fibers, polyethylene naphthalate fibers, and aramid fibers. The carcass 12 may be formed of two or more plies.

The belt 14 is located inward of the tread 4 in the radial direction. The belt 14 is laminated on the carcass 12. The belt 14 reinforces the carcass 12. The belt 14 includes an inner layer 36 and an outer layer 38. As is obvious from FIG. 1, the outer layer 38 is located outward of the inner layer 36 in the radial direction. Each of the inner layer 36 and the outer layer 38 includes multiple cords aligned with each other, and a topping rubber, which are not shown. Each cord is tilted relative to the equator plane. The absolute value of the tilt angle is generally not less than 10° and not greater than 35°. The direction in which each cord of the inner layer 36 is tilted relative to the equator plane is opposite to the direction in which each cord of the outer layer 38 is tilted relative to the equator plane. The material of the cords is preferably steel. An organic fiber may be used for the cords. The width, in the axial direction, of the belt 14 is preferably equal to or greater than 0.7 times the maximum width of the tire 2. The belt 14 may include three or more layers.

The tire 2 may include a band together with or instead of the belt 14. The belt 14 and the band form a reinforcing layer. In the case where this tire includes the belt 14 and a band as a reinforcing layer, the band is located outward of the belt 14 in the radial direction. The band includes a cord and a topping rubber. The cord is helically wound. The band has a so-called jointless structure. The cord extends substantially in the circumferential direction. The angle of the cord relative to the circumferential direction is preferably not greater than 5° and further preferably not greater than 2°. The belt 14 is held by this cord. Thus, lifting of the belt 14 is inhibited. The cord is formed from an organic fiber. Examples of preferable organic fibers include nylon fibers, polyester fibers, rayon fibers, polyethylene naphthalate fibers, and aramid fibers.

The inner liner 16 is located inward of the carcass 12. The inner liner 16 is joined to the inner surface of the carcass 12 in the vicinity of the equator plane. The inner liner 16 is formed from a vulcanized rubber having excellent air blocking property. A typical base rubber of the inner liner 16 is an isobutylene-isoprene-rubber or halogenated isobutylene-isoprene-rubber. The inner liner 16 maintains the internal pressure of the tire 2.

Each cushion layer 20 is laminated on the carcass 12 in the vicinity of an end portion of the belt 14. The cushion layer 20 is formed from a flexible vulcanized rubber. The cushion layer 20 absorbs stress of the end portion of the belt 14. The cushion layer 20 inhibits lifting of the belt 14.

Each chafer 18 is located in the vicinity of the bead 10. When the tire 2 is mounted onto the rim 40, the chafer 18 comes into contact with the rim 40. Because of this contact, the vicinity of the bead 10 is protected. In this embodiment, the chafer 18 is integrated with the clinch 8. Therefore, each chafer 18 of the tire 2 is formed from the same vulcanized rubber as the clinch 8. In the tire 2 in which each clinch 8 and each chafer 18 are integrally formed from a vulcanized rubber having the same blending formula, the clinch 8 is also sometimes referred to as chafer 18. Each chafer 18 and each clinch 8 may not be integrally formed and may be formed from vulcanized rubbers having different blending formulas. In this case, the chafer 18 may be formed from a fiber-coating rubber. The fiber-coating rubber includes a fabric and a vulcanized rubber with which the fabric is impregnated. The main component of the fiber-coating rubber is the vulcanized rubber. The vulcanized rubber will be described in detail later.

In the present invention, unless otherwise specified, the dimensions and angles of the components of the tire are measured in a state where the tire is mounted on a normal rim and inflated with air to a normal internal pressure. Upon the measurement, no load is applied to the tire. In the present description, the normal rim means a rim specified in a standard on which the tire is based. The "standard rim" in the JATMA standard, the "Design Rim" in the TRA standard, and the "Measuring Rim" in the ETRTO standard are normal rims. In the present description, the normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

As shown in FIG. 1, when the tire 2 is mounted onto the rim 40, each clinch 8 comes into contact with the flange of the rim 40, and each chafer 18 comes into contact with the rim 40. In other words, the tire 2 is configured such that, in a state where the tire 2 is mounted on the rim 40, each clinch 8 and each chafer 18 are in contact with the rim 40. Hereinafter, in the present description, the clinch 8 and the chafer 18 are sometimes collectively referred to as "rim/flange portion".

In the tire 2 according to the present invention, the pair of clinches 8 and/or the pair of chafers 18, which are in contact with the rim 40, are formed from a clinch rubber or a fiber-coating rubber. The main components of the clinch rubber and the fiber-coating rubber are each a vulcanized rubber having a dynamic friction coefficient not less than 1.0. The dynamic friction coefficient of the vulcanized rubber is obtained by measuring a test piece having a thickness of 1 mm and a plan view area of 49 mm², using a friction tester provided with a friction surface having a surface roughness similar to that of the rim 40, at a contact pressure of 2000 kPa and a sliding speed of 10 mm/s. With the test piece and the test conditions, the behavior of the vulcanized rubber in the vicinity of the rim during tire running is simulated. The rim/flange portion formed from the clinch rubber or the fiber-coating rubber containing, as a main component, a vulcanized rubber having a dynamic friction coefficient, obtained with the test piece under the test conditions, that is not less than 1.0 can withstand great force applied from the rim 40 during running of the tire 2 and firmly hold fitting to the rim 40. With the tire 2, rim shift during running is inhibited.

From the viewpoint of improvement in rim shift resistance, the dynamic friction coefficient of the vulcanized rubber forming the clinches 8 and/or the chafers 18 is more preferably not less than 1.1 and particularly preferably not less than 1.2.

As described above, in the tire 2 according to this embodiment, each clinch 8 and each chafer 18 are integrally formed into a rim/flange portion. Therefore, in the tire 2, both the clinch 8 and the chafer 18 are formed from a clinch rubber containing, as a main component, a vulcanized rubber having a dynamic friction coefficient not less than 1.0. In an embodiment in which each clinch 8 and each chafer 18 are not integrally formed, at least one of the clinch 8 and the chafer 18 is formed from a vulcanized rubber having a dynamic friction coefficient not less than 1.0. From the viewpoint of rim shift resistance, both the clinch 8 and the chafer 18 are preferably formed from a vulcanized rubber having a dynamic friction coefficient not less than 1.0.

Preferably, a hardness Hs of the vulcanized rubber is not less than 70. A rim/flange portion formed using the vulcanized rubber having a hardness Hs not less than 70 has excellent wear resistance. With the tire 2 including the rim/flange portion, rim shift resistance is sufficiently exhibited even during running over a long period of time. From this viewpoint, the hardness Hs of the vulcanized rubber is more preferably not less than 73 and further preferably not less than 75. From the viewpoint of ride comfort, the hardness Hs is preferably not greater than 90. In the present description, the hardness Hs of the vulcanized rubber is a JIS-A hardness measured with a type A durometer according to the measurement method described in JIS K6253. The measurement method will be described in detail in EXAMPLES later.

Hereinafter, the vulcanized rubber used for forming the clinches 8 and/or the chafers 18 will be described in detail. However, the blending formula of the vulcanized rubber is not limited to the following description as long as a dynamic friction coefficient not less than 1.0 is obtained with the above-described test piece under the above-described conditions.

The vulcanized rubber used for forming the clinches 8 and/or the chafers 18 is produced by heating and pressurizing a rubber composition. Examples of the base rubber of the rubber composition include natural rubber (NR), epoxidized natural rubber (ENR), butadiene rubber (BR), isoprene rubber (IR), styrene-butadiene rubber (SBR), ethylene-propylene-diene rubber (EPDM), chloroprene rubber (CR), acrylonitrile butadiene rubber (NBR), acrylonitrile butadiene-styrene rubber (ABS), isobutylene-isoprene-rubber (IIR), and halogenated isobutylene-isoprene rubber (X-IIR). One or more base rubbers may be appropriately selected and used. From the viewpoint that the advantageous effects of the present invention are easily obtained, natural rubber, butadiene rubber, and styrene-butadiene rubber are suitably used.

Preferably, the rubber composition contains an inorganic filler having a flat shape. When the inorganic filler having a flat shape is blended, a dynamic friction coefficient not less than 1.0 is easily obtained with the above-described test piece under the above-described test conditions. In the present application, the term "flat shape" means a shape in which the aspect ratio (maximum length/thickness) defined by the maximum length and the thickness of particles is not less than 3, and the concept thereof includes a plate shape, a flaky shape, and a scaly shape. The maximum length and the thickness of particles are arithmetic mean values obtained by measuring the lengths and the thicknesses of 100 randomly selected primary particles in microscope observation with a transmission electron microscope or the like.

The type of the inorganic filler having a flat shape is not particularly limited as long as the advantageous effects of the present invention are obtained. Examples of the inorganic filler having a flat shape include hard clay, mica, talc, graphite, graphene, bentonite, halloysite, montmorillonite, beidellite, saponite, hectorite, nontronite, vermiculite, illite, allophane, bituminous coal, calcium carbonate, aluminum oxide, and aluminum hydroxide. Hard clay, mica, talc, calcium carbonate, bituminous coal, graphene, aluminum oxide, and aluminum hydroxide are more preferable, and hard clay, mica, and graphene are particularly preferable. Two or more of these fillers may be used in combination.

The aspect ratio of the inorganic filler having a flat shape is preferably not less than 5, more preferably not less than 7, and particularly preferably not less than 10. The aspect ratio is preferably not greater than 1000. If the aspect ratio is greater than 1000, the inorganic filler may be destroyed during kneading.

The average particle diameter of the inorganic filler having a flat shape is preferably not less than 0.01 µm, more preferably not less than 0.05 µm, and particularly preferably not less than 0.1 µm. The average particle diameter is preferably not greater than 100 µm. If the average particle diameter is greater than 100 µm, the inorganic filler may be destroyed during kneading. If the average particle diameter is less than 0.01 µm, the production cost is high, and the inorganic filler also may become a fracture nucleus since the inorganic filler easily self-aggregates. In the present description, the average particle diameter is a volume-based cumulative 50% particle diameter obtained by laser diffraction type particle size distribution measurement.

From the viewpoint that the advantageous effects of the present invention are easily obtained, the blending amount of the inorganic filler having a flat shape per 100 parts by mass of the base rubber is preferably not less than 1 part by mass, more preferably not less than 2 parts by mass, and particularly preferably not less than 3 parts by mass. From the viewpoint of balance with other tire physical properties, the blending amount of the inorganic filler having a flat shape is preferably not greater than 100 parts by mass.

As long as the advantageous effects of the present invention are not impaired, the rubber composition may contain another filler that does not have a flat shape. Examples of the other filler include carbon black, silica, magnesium carbonate, magnesium sulfate, diatomaceous earth, and barium sulfate.

In addition to the above described base rubber and the above described inorganic filler having a flat shape, the rubber composition may contain ingredients that are normally blended in a rubber composition for a tire member, such as a vulcanizing agent, a vulcanization accelerator, a vulcanization accelerator aid, an oil, a resin, an antioxidant, and waxes. The blending amount of each of the ingredients is not particularly limited as long as the advantageous effects of the present invention are obtained. The blending amount may be a general blending amount for the rubber composition for the clinches 8 or for the chafers 18.

Examples of the vulcanizing agent include: sulfurs such as powdery sulfur, surface-treated sulfur, precipitated sulfur, colloidal sulfur, and insoluble sulfur; and organic peroxides such as dicumyl peroxide, 1,1-bis(t-butylperoxy)-3,3,5-trimethylcyclohexane, 2,5-dimethyl-2,5-di(t-butylperoxy)hexane, and di-t-butyl peroxide. The vulcanizing agent is preferably sulfur. Here, sulfur means so-called elemental sulfur, and does not mean a sulfur atom contained in a sulfur compound.

Examples of the vulcanization accelerator include: sulfenamide-based vulcanization accelerators such as N-cyclohexyl-2-benzothiazyl sulfenamide, N-t-butyl-2-benzothiazole sulfenamide, N-oxyethylene-2-benzothiazole sulfenamide, and N,N'-diisopropyl-2-benzothiazole sulfenamide; guanidine-based vulcanization accelerators such as diphenylguanidine, diorthotolylguanidine, and orthotolylbiguanidine; thiourea-based vulcanization accelerators such as diethylthiourea; thiazole-based vulcanization accelerators such as 2-mercaptobenzothiazole, di-2-benzothiazolyl disulfide, and 2-mercaptobenzothiazole zinc salt; thiuram-based vulcanization accelerators such as tetramethylthiuram monosulfide and tetramethylthiuram disulfide; dithiocarbamic acid-based vulcanization accelerators such as sodium dimethyldithiocarbamate and zinc diethyldithiocarbamate; and xanthogenic acid-based vulcanization accelerators such as sodium isopropyl xanthate, zinc isopropyl xanthate, and zinc butyl xanthate. Two or more of these vulcanization accelerators may be used in combination. Examples of the vulcanization accelerator aid include zinc oxide, magnesium oxide, zinc carbonate, stearic acid, and amines.

Examples of the oil include: process oils such as paraffinic process oil, naphthenic process oil, and aromatic process oil; and vegetable oils such as castor oil, cotton seed oil, linseed oil, and rapeseed oil. Examples of the resin include petroleum-based resins, rosin, pitch, terpene resins, phenol resins, and phenol/aldehyde resins.

Examples of the antioxidant include: amine-based antioxidants including naphthylamine-based antioxidants such as phenyl-α-naphthylamine, diphenylamine-based antioxidants such as octylated diphenylamine and 4,4'-bis(α,α'-dimethylbenzyl)diphenylamine, and p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; phenol-based antioxidants including monophenol-based antioxidants such as 2,6-di-t-butyl-4-methylphenol and styrenated phenol, and bis-, tris-, and poly-phenol-based antioxidants such as tetrakis-[methylene-3-(3',5'-di-t-butyl-4'-hydroxyphenyl)propionate]methane; and polyphenol-based antioxidants such as WINGSTAY-L.

Examples of waxes include: petroleum waxes such as paraffin wax and microcrystalline wax; natural waxes such as bees wax and carnauba wax; and synthetic waxes such as polyethylene wax and fatty acid ester wax.

As long as the advantageous effects of the present invention are not impaired, the rubber composition may further contain a coupling agent, an oxidation inhibitor, a light stabilizer, an anti-scorch agent, a lubricant, a processing aid, a colorant, a flame retardant, an antistatic agent, a matting agent, an anti-blocking agent, an ultraviolet absorber, a mold release agent, etc.

In the present invention, a method for producing the rubber composition used for the rim/flange portion is not particularly limited. For example, an unvulcanized rubber composition for the rim/flange portion is obtained by mixing as appropriate the base rubber, the inorganic filler having a flat shape, and the above-described ingredients using a kneading machine such as a Banbury mixer, a kneader, or an open roll. A vulcanized rubber forming the rim/flange portion is obtained by heating and pressurizing the rubber composition in a vulcanizing machine.

As described above, in the tire 2 according to this embodiment, each clinch 8 and each chafer 18 are integrally formed into a rim/flange portion. In the tire 2, the clinch 8 and the chafer 18 are formed from a vulcanized rubber (that is, clinch rubber) having the same blending formula. In the case of an embodiment in which each clinch 8 and each chafer 18 are not integrally formed, the blending formula of the vulcanized rubber forming the clinch 8 and the blending formula of the vulcanized rubber 18 may be the same or different from each other. In the present invention, the blending formula of the vulcanized rubber is selected such that a dynamic friction coefficient obtained with the above-described test piece under the above-described test conditions for at least either the clinch 8 or the chafer 18 is not less than 1.0. From the viewpoint of rim shift resistance, the blending formula of the vulcanized rubber is preferably selected such that each of the clinch 8 and the chafer 18 is a vulcanized rubber having a dynamic friction coefficient not less than 1.0.

Next, a method for producing the tire 2 according to an embodiment of the present invention will be described. The production method includes a preparation step, a measurement step, an evaluation step, and a production step.

In the preparation step, a test piece formed from a vulcanized rubber is prepared. Specifically, a sheet-shaped vulcanized rubber is obtained by kneading the base rubber, the inorganic filler having a flat shape, and the ingredients that are described above for the rim/flange portion, to obtain an unvulcanized rubber composition, and heating and pressurizing the unvulcanized rubber composition. A test piece having a thickness of 1 mm and a plan view area of 49 mm² is obtained by processing the vulcanized rubber sheet.

In the measurement step, the dynamic friction coefficient of the test piece is measured. A friction tester provided with a friction surface is used for measuring the dynamic friction coefficient. In the production method according to the present invention, the friction surface of the friction tester has a surface roughness similar to that of the rim 40. The surface roughness of the rim 40 measured by a laser microscope is normally about 1.0 µm as a Ra value (arithmetic mean roughness). The material of the friction surface is not particularly limited as long as the friction surface has a surface roughness similar to that of the rim 40, and examples of the material include metals such as stainless steel, and acrylic resin. In addition, the type of the friction tester is also not particularly limited as long as the friction tester is provided with a friction surface having a surface roughness similar to that of the rim 40.

In the measurement step of the production method according to the present invention, the dynamic friction coefficient is measured by pressing the test piece against the friction surface having a surface roughness similar to that of the rim 40 at a contact pressure of 2000 kPa (load: 100 N), and moving the test piece at a sliding speed of 10 mm/s. The measurement temperature is normally 23°C. The contact pressure of 2000 kPa is considerably higher than the contact pressure used normally in a friction test. The dynamic friction coefficient obtained under the measurement conditions reflects the behavior of the rim/flange portion in the vicinity of the rim 40 during running of the tire 2.

Preferably, prior to dynamic friction coefficient measurement, the measurement surface of the test piece is subjected to friction treatment. The friction surface of the above-described friction tester is also used for friction treatment of the test piece. Specifically, friction treatment of the test piece is performed by pressing the test piece against the friction surface and repeatedly moving the test piece. More preferably, friction treatment of the test piece is performed by pressing the test piece against the friction surface at a contact pressure of 2000 kPa (load: 100 N) and repeatedly moving the test piece at a sliding speed of 10 mm/s.

In this embodiment, during the friction treatment, the variations of the dynamic friction coefficient with the movement of the test piece are recorded, and the standard deviation of the dynamic friction coefficient is calculated. The number of times of movement of the test piece is set using the standard deviation as an index. From the viewpoint of measurement accuracy, after the friction treatment is repeated until the standard deviation becomes equal to or less than 0.10, a friction test is performed under the above-mentioned measurement conditions to determine the dynamic friction coefficient of the test piece.

In the evaluation step, the vulcanized rubber is evaluated using the obtained dynamic friction coefficient as an index. Specifically, the blending formula of a vulcanized rubber having a dynamic friction coefficient, obtained under the above-described measurement conditions, that is not less than 1.0 is selected as the blending formula of the vulcanized rubber for the rim/flange portion.

In the production step, the pair of clinches 8 and/or the pair of chafers 18 are produced by obtaining a clinch rubber or a fiber-coating rubber using the blending formula of the vulcanized rubber having a dynamic friction coefficient not less than 1.0. For example, an unvulcanized rubber composition is obtained by mixing the base rubber, the inorganic filler having a flat shape, and the ingredients with a kneading machine according to the blending formula of the vulcanized rubber forming the test piece. Next, the rubber composition is extruded into the shape of each clinch 8 and/or each chafer 18, then attached together with other tire members, and shaped on a tire-shaping machine to form an unvulcanized tire. Thereafter, the unvulcanized tire is heated and pressurized in a vulcanizing machine, whereby the tire 2 including the pair of clinches 8 and the pair of chafers 18 is produced. Each chafer 18 may be formed by using a fiber-coating rubber obtained by impregnating a cloth, made of an organic fiber such as polyamide fibers, polyester fibers, and polyethylene terephthalate fibers, with this rubber composition.

With the production method according to the present invention, the pneumatic tire 2 including the rim/flange portion formed from the vulcanized rubber having a dynamic friction coefficient, obtained under the above-described measurement conditions, that is not less than 1.0, is obtained. The tire 2 has excellent rim shift resistance.

Next, a rim shift resistance evaluation method according to the present invention will be described. The evaluation method includes: a preparation step of preparing a test piece formed from a vulcanized rubber; a measurement step of measuring the dynamic friction coefficient of the test piece using a friction tester provided with a friction surface having a surface roughness similar to that of a rim; and an evaluation step of evaluating the vulcanized rubber using the dynamic friction coefficient obtained in the measurement step as an index. Preferably, the evaluation method further includes a step of performing friction treatment on the test piece before the measurement step.

In the measurement step of the evaluation method, the dynamic friction coefficient of the test piece is measured at a contact pressure of 2000 kPa or greater and a sliding speed of 10 mm/s or greater. The dynamic friction coefficient obtained under the measurement conditions sufficiently reflects the behavior of the rim/flange portion during running of the tire 2. The blending formula of the vulcanized rubber for the rim/flange portion having high rim shift resistance can be selected by using the dynamic friction coefficient as an index, without producing the tire 2.

From the viewpoint of correlation with rim shift resistance, the contact pressure in the measurement step is preferably not less than 2500 kPa and more preferably not less than 3000 kPa. From the same viewpoint, the sliding speed is preferably not less than 12 mm/s and more preferably not less than 15 mm/s. Normally, the upper limit of the contact pressure is 20000 kPa, and the upper limit of the sliding speed is 30 mm/s.

The contact pressure in the measurement step is adjusted on the basis of a load applied upon measurement and the area of the test piece. From the viewpoint of achieving a high contact pressure, the plan view area of the test piece is preferably not greater than 100 mm² and more preferably not greater than 50 mm². From the viewpoint of measurement accuracy, the lower limit of the plan view area of the test piece is 25 mm².

The load applied upon measurement is adjusted in accordance with the plan view area of the prepared test piece such that a contact pressure of 2000 kPa or greater is achieved. From the viewpoint of correlation with rim shift resistance and suppression of deformation of the test piece, the load is preferably not less than 100 N and not greater than 200 N.

In the evaluation method, the test piece normally has a sheet shape. From the viewpoint of suppressing shear deformation of the test piece due to a high contact pressure (large load), the thickness of the test piece is preferably not greater than 1.5 mm and more preferably not greater than 1.0 mm. From the viewpoint of measurement accuracy, the lower limit of the thickness of the test piece is 0.6 mm. As long as the advantageous effects of the present invention are obtained, the plan view shape of the test piece is not particularly limited.

As long as the advantageous effects of the present invention are not impaired, the method and the conditions for the friction treatment before the measurement step are not particularly limited. The treatment method described above in the production method can also be used in the evaluation method.

From the viewpoint of measurement accuracy improvement, the test piece is preferably repeatedly subjected to friction treatment. The number of repetitions is determined using the standard deviation of the dynamic friction coefficient measured during the friction treatment as an index. From the viewpoint of measurement accuracy improvement and work efficiency, the friction treatment is repeatedly performed such that the standard deviation preferably becomes equal to or less than 0.10 and more preferably becomes equal to or less than 0.06.

### EXAMPLES

Hereinafter, effects of the present invention are shown by means of examples, but the present invention should not be construed in a limited manner based on the description of these examples.

### [Examples 1 to 6 and Comparative Examples 1 to 5]

In accordance with the blending formulas shown in Tables 1 and 2 below, the materials other than sulfur and the vulcanization accelerator were put into a Banbury mixer having a capacity of 1.7 L (manufactured by Kobe Steel, Ltd.), and kneaded at 150°C for 3 minutes. The obtained kneaded products were taken out, and sulfur and the vulcanization accelerator were added thereto in the amounts shown in Table 1. Thereafter, the mixtures were kneaded at 80°C for 3 minutes using an open roll, thereby obtaining unvulcanized rubber compositions. The obtained unvulcanized rubber compositions were press-vulcanized at 165°C for 20 minutes, thereby producing vulcanized rubber sheets having a thickness of 1 mm. Subsequently, the rubber sheets were cut to obtain test pieces (7 mm long × 7 mm wide × 1 mm thick) of Examples 1 to 6 and Comparative Examples 1 to 5.

### [Rim Shift Resistance Evaluation]

First, the test piece was attached to a stainless steel plate (support) with an adhesive. This support was installed on a multifunctional friction tester (trade name "UMT TriboLab", manufactured by Bruker) provided with a friction surface (made of metal, surface roughness (Ra): 1.0 µm). Then, friction treatment of the test piece was performed by pressing the test piece against the friction surface and moving the test piece. The friction treatment conditions are as follows.
Contact pressure: 2000 kPa (load: 100 N)
Sliding speed: 10 mm/s
Sliding distance: 4 mm
Temperature: 23°C

During the friction treatment, the variations of a dynamic friction coefficient with the movement of the test piece were recorded, and the standard deviation of the dynamic friction coefficient was calculated. The friction treatment was repeated until the standard deviation became equal to or less than 0.10. The number of repetitions was about five times. Then, a friction test was performed using the test piece subjected to the friction treatment, and the average of the dynamic friction coefficient in the section of 30 to 35 mm was calculated. The measurement conditions are as follows.
Contact pressure: 2000 kPa (load: 100 N)
Sliding speed: 10 mm/s
Temperature: 23°C

The obtained dynamic friction coefficient is shown as µ[-] in Tables 1 and 2 below. An index for which the dynamic friction coefficient µ of Comparative Example 1 is regarded as 100 is shown as rim shift resistance in Tables 1 and 2 below.

### [Rubber Hardness Measurement]

The hardnesses Hs of the vulcanized rubbers of Examples 1 to 6 and Comparative Examples 1 to 5 were measured at 23°C with a type A durometer. The measurement was performed in a state where three test pieces having a thickness of 1 mm were stacked. The measurement results are shown as hardness Hs in Tables 1 and 2 below.

### [Table 1]

**(Table 1) (parts by mass)**

| | Example 1 | Example 2 | Example 3 | Example 4 | Example 5 | Example 6 |
|---|---|---|---|---|---|---|
| NR | 65 | 40 | 65 | 65 | 65 | 65 |
| BR | 10 | 60 | 10 | 10 | 10 | 10 |
| SBR | 25 | 0 | 25 | 25 | 25 | 25 |
| CB1 | 0 | 0 | 45 | 45 | 0 | 0 |
| CB2 | 45 | 45 | 0 | 0 | 45 | 45 |
| Hard clay | 25 | 25 | 25 | 0 | 35 | 25 |
| Mica | 0 | 0 | 0 | 25 | 0 | 0 |
| Calcium carbonate | 0 | 0 | 0 | 0 | 0 | 0 |
| Talc | 0 | 0 | 0 | 0 | 0 | 0 |
| Oil | 17 | 15 | 17 | 17 | 17 | 17 |
| C5C9-based resin | 2 | 4 | 2 | 2 | 2 | 2 |
| Antioxidant | 2 | 2 | 2 | 2 | 2 | 2 |
| Stearic acid | 2 | 2 | 2 | 2 | 2 | 2 |
| Zinc oxide | 5.0 | 5.0 | 5.0 | 5.0 | 5.0 | 5.0 |
| Sulfur | 3.7 | 3.7 | 3.7 | 3.7 | 3.7 | 2.5 |
| Vulcanization accelerator | 1.0 | 1.5 | 1.0 | 1.0 | 1.0 | 2.0 |
| Hardness Hs (JIS-A) | 71 | 71 | 76 | 73 | 76 | 71 |
| µ [-] | 1.33 | 1.30 | 1.42 | 1.36 | 1.40 | 1.31 |
| Rim shift resistance | 150 | 155 | 160 | 135 | 160 | 145 |

### [Table 2]

**(Table 2 (parts by mass)**

| | Comparative Example 1 | Comparative Example 2 | Comparative Example 3 | Comparative Example 4 | Comparative Example 5 |
|---|---|---|---|---|---|
| NR | 40 | 65 | 65 | 65 | 65 |
| BR | 60 | 10 | 10 | 10 | 10 |
| SBR | 0 | 25 | 25 | 25 | 25 |
| CB1 | 65 | 65 | 0 | 0 | 0 |
| CB2 | 0 | 0 | 45 | 45 | 45 |
| Hard clay | 0 | 0 | 5 | 0 | 0 |
| Mica | 0 | 0 | 0 | 0 | 0 |
| Calcium carbonate | 0 | 0 | 0 | 25 | 0 |
| Talc | 0 | 0 | 0 | 0 | 25 |
| Oil | 8 | 17 | 17 | 17 | 17 |
| C5C9-based resin | 0 | 2 | 2 | 2 | 2 |
| Antioxidant | 2 | 2 | 2 | 2 | 2 |
| Stearic acid | 2 | 2 | 2 | 2 | 2 |
| Zinc oxide | 2.5 | 5.0 | 5.0 | 5.0 | 5.0 |
| Sulfur | 2.5 | 3.7 | 3.7 | 3.7 | 3.7 |
| Vulcanization accelerator | 2.0 | 1.0 | 1.0 | 1.0 | 1.0 |
| Hardness Hs (JIS-A) | 71 | 71 | 60 | 60 | 64 |
| µ [-] | 0.75 | 0.73 | 0.67 | 0.65 | 0.70 |
| Rim shift resistance | 100 | 85 | 65 | 65 | 70 |

The details of the compounds described in Tables 1 and 2 are as follows.
NR: natural rubber, trade name "TSR20"
BR: high-cis butadiene rubber, trade name "BR150B", manufactured by Ube Industries, Ltd.
SBR: styrene-butadiene rubber, trade name "SBR1712", manufactured by JSR Corporation
CB1: carbon black, trade name "DIABLACK N330" (N₂SA: 79 m²/g), manufactured by Mitsubishi Chemical Corporation
CB2: carbon black, trade name "N660" (N₂SA: 35 m²/g), manufactured by Jiangxi Black Cat Co., Ltd.
Hard clay: kaolin clay, trade name "Crown Clay" (average particle diameter: 0.6 µm), manufactured by Southeastern Clay Company
Mica: mica, trade name "S-200HG" (phlogopite, average particle diameter: 50 µm, aspect ratio: 55), manufactured by Repco Inc.
Calcium carbonate: trade name "Tancaru 200" (average particle diameter: 2.7 µm, specific gravity: 2.68, BET specific surface area: 1.5 m²/g), manufactured by Takehara Kagaku Kogyo Co., Ltd.
Talc: flat talc, trade name "HAR" (average particle diameter: 5.7 µm, specific gravity: 2.7, BET specific surface area: 22 m²/g), manufactured by Imerys Specialities Japan Co., Ltd.
Oil: aroma oil, trade name "Diana Process AH-24", manufactured by Idemitsu Kosan Co., Ltd.
C5C9-based resin: petroleum-based resin, trade name "PETROTACK 100V", manufactured by Tosoh Corporation
Antioxidant: N-(1,3-dimethylbutyl)-N'-phenyl-p-phenylenediamine (6PPD), trade name "ANTIGENE 6C", manufactured by Sumitomo Chemical Co., Ltd.
Stearic acid: trade name "Tsubaki", manufactured by NOF Corporation
Zinc oxide: trade name "Zinc Oxide Type-2", manufactured by Mitsui Mining & Smelting Co., Ltd.
Sulfur: trade name "Seimi Sulfur" (insoluble sulfur, containing 10% of oil), manufactured by Nippon Kanryu Industry Co., Ltd.
Vulcanization accelerator: N-cyclohexyl-2-benzothiazolyl sulfenamide (CBS), trade name "NOCCELER CZ-G", manufactured by Ouchi Shinko Chemical Industrial Co., Ltd.

### [Rim shift Amount Measurement]

In accordance with the blending formulas for Example 1 and Comparative Example 1 shown in Tables 1 and 2, unvulcanized rubber compositions were obtained under the above-described conditions. Each obtained unvulcanized rubber composition was integrally molded into the shapes of clinches and chafers, and then attached together with other tire members on a tire-shaping machine to form an unvulcanized tire. Each unvulcanized tire was vulcanized at 170°C for 12 minutes in a vulcanizing machine, thereby producing a test tire 1 and a comparative test tire 1 having the basic configuration shown in FIG. 1 (size: 285/35ZRF20 (100Y)).

Each of the obtained tires was mounted onto a normal rim and inflated with air into an internal pressure of 160 kPa. Then, each tire and each rim were marked and attached to an inside rolling tester. Thereafter, each tire was rolled under the following conditions, and a state at a slip rate of 3.0% was maintained for 3 seconds. Then, the deviation between the marks on the tire and the rim was measured with a ruler.
Rolling speed: 80 km/h
Load: 6.5 kN
Slip angle: 0°

Similarly, a commercially available tire (product of another manufacturer) having the same size was used as a test tire 2, and rim shift amount measurement was performed for the test tire 2. The results obtained for the test tires 1 and 2 and the comparative test tire 1 are shown as rim shift amount (mm) in Table 3 below.

### [Table 3]

**(Table 3)**

| | Test tire 1 | Test tire 2 | Comparative test tire 1 |
|---|---|---|---|
| µ[-] | 1.33 | 1.05 | 0.75 |
| Rim shift resistance | 150 | 140 | 100 |
| Rim shift amount [mm] | 17 | 17 | 37 |

In addition, the vulcanized rubber was sampled from the rim/flange portion of the test tire 2, and measured for dynamic friction coefficient µ [-] by the above-described method. An index for which the dynamic friction coefficient µ of Comparative Example 1 in Table 2 is regarded as 100 is shown as the rim shift resistance of the test tire 2 in Table 3. In Table 3, the dynamic friction coefficients µ and the rim shift resistance of Example 1 (test tire 1) and Comparative Example 1 (comparative test tire 1) shown in Tables 1 and 2 are also shown for comparison.

As shown in Table 3, in the test tire 1 and the test tire 2 in which the dynamic friction coefficient is greater than 1, the rim shift amount was reduced to 50% or less of that of the comparative test tire 1 in which the dynamic friction coefficient is 0.75. From this, it is found that with the evaluation method according to the present invention, rim shift resistance can be predicted with high accuracy without producing a tire as in the conventional art.

### [Comparative Test 1]

Test pieces (10 mm long × 10 mm wide × 1 mm thick) were prepared using the vulcanized rubbers forming the rim/flange portions of the test tires 1 and 2 and the comparative test tire 1, and rim shift resistance evaluation was performed under the above-described conditions except that the contact pressure was changed to 1000 kPa (load: 100 N). The obtained dynamic friction coefficient is shown as µ-c [-] in Table 4 below, and an index for which the dynamic friction coefficient µ-c of the comparative test tire 1 is regarded as 100 is shown as rim shift resistance (C) in Table 4 below.

### [Table 4]

**(Table 4)**

| | Test tire 1 | Test tire 2 | Comparative test tire 1 |
|---|---|---|---|
| µ-c [-] | 1.77 | 1.42 | 1.02 |
| Rim shift resistance (C) | 174 | 139 | 100 |
| Rim shift amount [mm] | 17 | 17 | 37 |

As shown in Tables 3 and 4, the correlation between the rim shift amount and the rim shift resistance by the dynamic friction coefficient µ obtained by the evaluation method according to the present invention is higher than that of the rim shift resistance (C) by the dynamic friction coefficient µ-c obtained in the comparative test 1. From the evaluation results, advantages of the present invention are clear.

The pneumatic tire described above can be applied to various vehicles.

A tire having excellent rim shift resistance and a rim shift resistance evaluation method are provided. The pneumatic tire includes a pair of clinches and/or a pair of chafers, and is configured such that, when the tire is mounted onto a rim, the clinches and the chafers are in contact with the rim. The pair of clinches and the pair of chafers are formed from a clinch rubber or a fiber-coating rubber containing a vulcanized rubber having a dynamic friction coefficient not less than 1.0 as a main component. The dynamic friction coefficient is obtained by measuring a test piece having a thickness of 1 mm and a plan view area of 49 mm², using a friction tester provided with a friction surface having a surface roughness similar to that of the rim, at a contact pressure of 2000 kPa and a sliding speed of 10 mm/s. The rim shift resistance evaluation method includes a step of preparing a test piece formed from a vulcanized rubber, a step of measuring a dynamic friction coefficient of the test piece, and a step of evaluating the vulcanized rubber using the dynamic friction coefficient as an index.

## Claims

1. A pneumatic tire (2) comprising a pair of clinches (8) and/or a pair of chafers (18), wherein
the tire (2) is configured such that, when the tire (2) is mounted on a rim (40), each clinch (8) and each chafer (18) are in contact with the rim (40),
the pair of clinches (8) and/or the pair of chafers (18) are formed from a clinch rubber or a fiber-coating rubber,
main components of the clinch rubber and the fiber-coating rubber are each a vulcanized rubber,
the vulcanized rubber has a dynamic friction coefficient not less than 1.0, and
the dynamic friction coefficient is obtained by measuring a test piece having a thickness of 1 mm and a plan view area of 49 mm², using a friction tester provided with a friction surface having a surface roughness similar to that of the rim (40), at a contact pressure of 2000 kPa and a sliding speed of 10 mm/s.

2. The pneumatic tire (2) according to claim 1, wherein the vulcanized rubber has a JIS-A hardness not less than 70.

3. The pneumatic tire (2) according to claim 1 or 2, wherein the vulcanized rubber contains an inorganic filler having a flat shape.

4. The pneumatic tire (2) according to claim 3, wherein the inorganic filler having a flat shape is selected from the group consisting of hard clay, mica, talc, calcium carbonate, bituminous coal, graphene, aluminum oxide, and aluminum hydroxide.

5. A method for producing the pneumatic tire (2) according to any one of claims 1 to 4, the method comprising:
a preparation step of preparing a test piece formed from a vulcanized rubber and having a thickness of 1 mm and a plan view area of 49 mm²;
a measurement step of measuring a dynamic friction coefficient of the test piece, using a friction tester provided with a friction surface having a surface roughness similar to that of a rim (40), under conditions of a contact pressure of 2000 kPa and a sliding speed of 10 mm/s;
an evaluation step of evaluating the vulcanized rubber using the dynamic friction coefficient obtained in the measurement step as an index; and
a production step of producing the pair of clinches (8) and/or the pair of chafers (18) from a clinch rubber or a fiber-coating rubber obtained by using a blending formula of a vulcanized rubber for which the dynamic friction coefficient is not less than 1.0.

6. A rim shift resistance evaluation method comprising:
a preparation step of preparing a test piece formed from a vulcanized rubber;
a measurement step of measuring a dynamic friction coefficient of the test piece using a friction tester provided with a friction surface having a surface roughness similar to that of a rim (40); and
an evaluation step of evaluating the vulcanized rubber using the dynamic friction coefficient obtained in the measurement step as an index, wherein
conditions for measuring the dynamic friction coefficient include a contact pressure of 2000 kPa or greater and a sliding speed of 10 mm/s or greater.

7. The evaluation method according to claim 6, wherein the test piece has a thickness not greater than 1.5 mm and a plan view area not greater than 100 mm².

8. The evaluation method according to claim 6 or 7, wherein the conditions for measuring the dynamic friction coefficient include a load of 100 N or greater.
